# EUROPÄISCHE PATENTANMELDUNG

(11) **EP 4 776 086 A1**
(43) Veröffentlichungstag der Anmeldung: **15.07.2026**
(21) Anmeldenummer: 26150875.8
(22) Anmeldetag: 08.01.2026
(51) Int. Cl.: G05B 19/042

(54) **VORRICHTUNG DER PROZESSFLUIDTECHNIK, PROZESSARMATUR, MODULSYSTEM**

(30) Priorität: 14.01.2025 DE 102025101037
(71) Anmelder: GEMÜ Gebr. Müller Apparatebau GmbH & Co. Kommanditgesellschaft, 74635 Kupferzell (DE)
(72) Erfinder: Strobel, Stephan, 74523 Schwäbisch Hall (DE); Feinauer, Pascal, 74629 Pfedelbach (DE); Lechmann, Vadim, 74653 Künzelsau (DE); Magej, Johann, 74523 Schwäbisch Hall (DE); Ickert, Thomas, 74925 Epfenbach (DE); Beez, Johannes, 74238 Klepsau (DE)
(74) Vertreter: DREISS Patentanwälte PartG mbB

(57) **Zusammenfassung**

Die Beschreibung betrifft eine Vorrichtung (100) der Prozessfluidtechnik, wobei die Vorrichtung (100) umfasst: eine Elektronik (130), welche dazu eingerichtet ist, wenigstens eine Regel-, Steuer- und/oder Messfunktion im Zusammenhang mit einem Prozessfluid bereitzustellen; wenigstens eine erste physische Schnittstelle (110), welche dazu eingerichtet ist, Prozess-assoziierte Kommunikation (C#1) zwischen der Elektronik (130) und wenigstens einer externen Prozesssteuerung (1000) bereitzustellen; und wenigstens eine zweite physische Schnittstelle (120), welche getrennt von der ersten physischen Schnittstelle (110) ausgeführt ist, wobei die zweite physische Schnittstelle (120) dazu eingerichtet ist, selektiv mit einem austauschbaren Modul (2000) gekoppelt zu werden, und wobei die zweite physische Schnittstelle (120) dazu eingerichtet ist, um über die Prozess-assoziierte Kommunikation (C#1) hinausgehende, zusätzliche Kommunikation (C#2) zwischen der Elektronik (130) und dem austauschbaren Modul (2000) zu ermöglichen.

## Beschreibung

Die Erfindung betrifft eine Vorrichtung der Prozessfluidtechnik, eine Prozessarmatur und ein Modulsystem.

Die Variantenvielfalt von elektronisch betriebenen Betriebseinheiten der Prozessfluidtechnik nimmt stetig zu.

Das der Erfindung zugrundeliegende Problem wird durch eine Vorrichtung gemäß dem Anspruch 1, eine Prozessarmatur gemäß einem nebengeordneten abhängigen Anspruch und durch ein Modulsystem gemäß einem weiteren nebengeordneten abhängigen Anspruch gelöst.

Ein Aspekt der Beschreibung betrifft eine Vorrichtung der Prozessfluidtechnik, wobei die Vorrichtung umfasst: eine Elektronik, welche dazu eingerichtet ist, wenigstens eine Regel-Steuer- und/oder Messfunktion im Zusammenhang mit einem Prozessfluid bereitzustellen; wenigstens eine erste physische Schnittstelle, welche dazu eingerichtet ist, Prozess-assoziierte Kommunikation zwischen der Elektronik und wenigstens einer externen Prozesssteuerung bereitzustellen; und wenigstens eine zweite physische Schnittstelle, welche getrennt von der ersten physischen Schnittstelle ausgeführt ist, wobei die zweite physische Schnittstelle dazu eingerichtet ist, selektiv mit einem austauschbaren Modul gekoppelt zu werden, und wobei die zweite physische Schnittstelle dazu eingerichtet ist, um über die Prozess-assoziierte Kommunikation hinausgehende, zusätzliche Kommunikation zwischen der Elektronik und dem austauschbaren Modul zu ermöglichen.

Vorteilhaft wird durch die so gestaltete Funktionseinheit die zusätzliche zweite physische Schnittstelle bereitgestellt, die selektiv für eine individualisierte Funktion wie beispielsweise eine Verbindung zu externen Sensoren, eine Bereitstellung einer zusätzlichen Drahtloskommunikation während oder außerhalb des Betriebs der Vorrichtung über die Prozessschnittstelle, also die erste physikalische Schnittstelle, genutzt werden kann. Zusätzlich bietet sich hier die Möglichkeit, getrennt von der ersten Schnittstelle die Bedatung und Überprüfung während der Produktion vorzunehmen. Nach Inbetriebnahme kann die zweite physikalische Schnittstelle zu Servicezwecken genutzt werden, beispielsweise um Diagnosen durchzuführen und dem Service vorbehaltende Funktionen zu aktivieren. Ebenso können mit der Vorrichtung assoziierte Aktoren oder Sensoren über die zweite Schnittstelle betrieben oder ausgelesen werden.

Die zweite Schnittstelle ermöglicht eine schnelle Anpassung an zusätzliche Gegebenheiten, ist also auch als Nachrüstlösung für zukünftig verfügbare Funktionen geeignet.

Ein vorteilhaftes Beispiel zeichnet sich dadurch aus, dass die Vorrichtung wenigstens ein Gehäuse umfasst, wobei die zweite Schnittstelle innerhalb des wenigstens einen Gehäuses angeordnet ist, wobei eine Zugangsöffnung des Gehäuses, welche zu der zweiten physischen Schnittstelle führt, durch das austauschbare Modul verschlossen ist.

Vorteilhaft ist die zweite Schnittstelle vor physischem Einwirken von außen geschützt und nur über die im Betriebszustand geschlossene Zugangsöffnung im Gehäuse zugänglich. Über die Zugangsöffnung ist das Modul austauschbar. Im eingebauten Zustand verschließt das Modul die Zugangsöffnung. Die zweite physische Schnittstelle wird also nur zugänglich, wenn das Modul von der Vorrichtung entfernt wird.

Ein vorteilhaftes Beispiel zeichnet sich dadurch aus, dass die Elektronik und die zweite Schnittstelle gemeinsam innerhalb des Gehäuses angeordnet sind.

Vorteilhaft kann dadurch eine kompakt bauende Vorrichtung bereitgestellt werden.

Ein vorteilhaftes Beispiel zeichnet sich dadurch aus, dass die zweite Schnittstelle auf einem Schaltungsträger angeordnet ist, welcher zu einem Teil die Elektronik trägt.

Die gemeinsame Anordnung auf dem einen Schaltungsträger trägt zur weiteren Kompaktierung der Bauweise bzw. Kompaktheit bei.

Ein vorteilhaftes Beispiel zeichnet sich dadurch aus, dass die erste physikalische Schnittstelle eine Mehrzahl von elektrischen Verbindungselementen umfasst, welche elektrisch leitend mit der Elektronik verbunden sind, wobei die zweite physikalische Schnittstelle eine Mehrzahl von elektrischen Verbindungselementen umfasst, welche elektrisch leitend mit der Elektronik verbunden sind.

Vorteilhaft sind die beiden Schnittstellen nicht nur funktional, sondern auch elektrisch getrennt voneinander ausgeführt.

Ein vorteilhaftes Beispiel zeichnet sich dadurch aus, dass wenigstens eine Führungskontur des Moduls bei einem Steckvorgang des Moduls in eine der Führungskontur zugeordnete Gegenkontur der Vorrichtung eingreift, um das Modul zumindest abschnittsweise entlang einer gedachten Steckachse in eine Aufnahmekammer der Vorrichtung einzuführen und die elektrische Verbindung zwischen dem Modul und der zweiten physikalischen Schnittstelle herzustellen.

Vorteilhaft wird durch die Steckverbindung das Modul in einer zur Steckachse lotrechten Ebene zur Vorrichtung festgelegt.

Ein vorteilhaftes Beispiel zeichnet sich dadurch aus, dass wenigstens ein Schaltungsträger, der zumindest einen Teil der Elektronik trägt, parallel zur Steckachse des austauschbaren Moduls angeordnet ist.

Vorteilhaft wird dadurch eine platzsparende Lösung bereitgestellt.

Ein vorteilhaftes Beispiel zeichnet sich dadurch aus, dass wenigstens eine Rastkontur des Moduls und eine zugeordnete Gegenrastkontur der Vorrichtung derart eingerichtet sind, dass die Rastkontur des Moduls und die Gegenrastkontur der Vorrichtung nach Überwindung einer Rastkraft derart ineinander eingreifen, um das Modul an einer vordefinierten Montageposition zu der Vorrichtung festzulegen.

Vorteilhaft wird damit für den Monteur eine haptische Rückmeldung über das Erreichen der finalen Montageposition, also der Position, in der das Modul während des Betriebs verbleibt, bereitgestellt.

Ein vorteilhaftes Beispiel zeichnet sich dadurch aus, dass das Modul einen Aufnahmeabschnitt umfasst, der dazu konfiguriert ist, einen Schaltungsträger aufzunehmen, welcher eine physische Gegenschnittstelle für die zweite physische Schnittstelle der Vorrichtung bereitstellt.

Vorteilhaft wird damit eine Modularität bereitgestellt, um die Vorrichtung durch unterschiedlich gestaltete Module zu verbinden.

Vorteilhaft können in den Aufnahmeabschnitt verschieden ausgebildete Schaltungsträger aufgenommen werden, wodurch das Modul unterschiedliche Funktionen sowohl in Alleinstellung auch in Kombination miteinander bereitstellen kann.

Ein vorteilhaftes Beispiel zeichnet sich dadurch aus, dass das austauschbare Modul ein Dichtungselement umfasst, welches eine fluiddichte Verbindung zwischen der Zugangsöffnung der Vorrichtung und dem Modul bereitstellt.

Vorteilhaft wird damit die Betriebssicherheit der Vorrichtung erhöht.

Ein vorteilhaftes Beispiel zeichnet sich dadurch aus, dass das Modul durch einen Benutzer nur werkzeuggebunden entfernt und ersetzt werden kann.

Vorteilhaft kann die Vorrichtung damit auch in explosionsgeschützten Bereichen eingesetzt werden.

Ein vorteilhaftes Beispiel zeichnet sich dadurch aus, dass das austauschbare Modul eine Drahtlosschnittstelle aufweist, welche gemeinsam mit der zweiten physischen Schnittstelle, der Gegenschnittstelle und der Elektronik dazu eingerichtet ist, um eine drahtlose Kommunikation zwischen der Elektronik und einem Endgerät, insbesondere mit einer Service-Applikation, welche auf dem Endgerät ausgeführt wird, zu ermöglichen.

Über die Drahtlosschnittstelle wird der Einsatz von App-fähigen Endgeräten ermöglicht. Zudem reduziert sich der Zulassungsaufwand, da lediglich das austauschbare Modul bei der Zulassungsbehörde vorgelegt werden muss. Dadurch wird auch zu einem gewissen Grad ein Knowhow-Schutz gewährleistet, da nicht alle internen Abläufe und Ausprägungen der Vorrichtung gegenüber den Zulassungsbehörden offenbart werden müssen. Die notwendige Offenbarung beschränkt sich damit auf das austauschbare Modul und dessen Varianten.

Insbesondere vor dem Hintergrund einer Vielzahl von Varianten der Vorrichtung wird nicht nur der Zulassungsaufwand reduziert, sondern durch die einheitliche Schnittstelle profitiert auch das Wartungspersonal von einer einheitlichen Handhabung des Moduls.

Sind die Cyber-Security-Anforderungen in der Prozessanlage erhöht, so kann das Modul mit der Drahtlosschnittstelle vom Kunden selbstständig demontiert und durch ein Modul ohne Drahtlosschnittstelle ersetzt werden.

Ein vorteilhaftes Beispiel zeichnet sich dadurch aus, dass das Endgerät dazu eingerichtet ist, mit der Vorrichtung assoziierte Zustandsinformationen und/oder Sensorsignale zu empfangen und über eine Benutzerschnittstelle des Endgeräts anzuzeigen.

Vorteilhaft kann im Rahmen einer Wartung oder einer Funktionsüberprüfung der aktuelle Zustand der Vorrichtung über das Endgerät vom Bedienpersonal abgelesen werden.

Ein vorteilhaftes Beispiel zeichnet sich dadurch aus, dass das Endgerät dazu eingerichtet ist, wenigstens einen Steuerbefehl über die Benutzerschnittstelle zu erfassen und den wenigstens einen Steuerbefehl an die Drahtlosschnittstelle des Moduls zu senden, wobei die Vorrichtung gemeinsam mit der Elektronik, der zweiten physischen Schnittstelle, der Gegenschnittstelle und der Drahtlosschnittstelle dazu eingerichtet ist, den wenigstens einen Steuerbefehl zu empfangen, und wenigstens ein Steuersignal für wenigstens einen Aktor in Abhängigkeit von dem wenigstens einen Steuerbefehl zu generieren.

Vorteilhaft können somit Funktionstests durchgeführt werden oder eine Wartung der Vorrichtung kann über die auf dem Endgerät ausgeführten Applikation durchgeführt werden. Die Bedienung der Vorrichtung im Service- und Wartungsfall wird so vereinfacht.

Ein vorteilhaftes Beispiel zeichnet sich dadurch aus, dass das austauschbare Modul eine Kommunikationsleitung aufweist, welche gemeinsam mit der zweiten physischen Schnittstelle, der Gegenschnittstelle und der Elektronik dazu eingerichtet ist, um eine drahtgebundene Kommunikation zwischen der Elektronik und einem weiteren Endgerät, insbesondere mit einer Wartungs- oder Bedatungs-Applikation, welche auf dem Endgerät ausgeführt wird, zu ermöglichen. Die Bedatungs-Applikation speichert vorgegebene Parameter auf der Speichereinheit der Elektronik ab.

Vorteilhaft kann somit bereits im Fertigungsprozess eine Bedatung oder eine Analyse durchgeführt werden. Zudem ist ein Wartungs- oder Serviceprozess einfach durchführbar.

Ein vorteilhaftes Beispiel zeichnet sich dadurch aus, dass das austauschbare Modul eine Sensorsignalleitung umfasst, welche gemeinsam mit der zweiten physischen Schnittstelle, der Gegenschnittstelle und der Elektronik dazu eingerichtet ist, wenigstens ein Sensorsignal eines Sensors an die Elektronik weiterzuleiten und/oder ein Ansteuersignal für einen Aktor von der Elektronik ausgehend zu versenden.

Vorteilhaft wird die Elektronik damit in die Lage versetzt, von entfernt angeordneten Sensoren Signale zu erfassen und weiterzuverarbeiten. Ebenso können entfernt von der Vorrichtung angeordnete Aktoren angesteuert werden.

Ein vorteilhaftes Beispiel zeichnet sich dadurch aus, dass das austauschbare Modul eine Bedieneinheit und/oder eine Anzeigeeinheit umfasst, welche gemeinsam mit der zweiten physischen Schnittstelle, der Gegenschnittstelle und der Elektronik dazu eingerichtet ist, mit der Vorrichtung assoziierte bzw. mit dem Prozess assoziierte und von der Elektronik bereitgestellte Zustandsdaten einem Benutzer anzuzeigen und/oder vom Benutzer eingegebene Befehle insbesondere zum Betreiben der Vorrichtung zu ermitteln und an die Elektronik zum Betreiben wenigstens eines Aktors weiterzugeben.

Vorteilhaft kann damit die Vorrichtung wahlweise mit einer Bedien- oder Anzeigeeinheit im Sinne einer Mensch-Maschine-Schnittstelle ausgestattet werden. Dies ermöglicht es situativ die Bedieneinheit vorzusehen, wohingegen andere Vorrichtungen der Prozessanlage auch ohne Bedieneinheit betrieben werden können.

Ein vorteilhaftes Beispiel zeichnet sich dadurch aus, dass das austauschbare Modul eine Abdichtung gegen Umwelteinflüsse bereitstellt und keine elektrische Verbindung mit der zweiten physischen Schnittstelle herstellt.

Vorteilhaft kann die Vorrichtung mit einem derart ausgeprägten Modul abgedichtet werden, um als Platzhalter für zukünftig mögliche Kommunikationszwecke über ein anders ausgeprägtes Modul zu dienen.

Ein weiterer Aspekt der Beschreibung betrifft ein Prozessventil umfassend die Vorrichtung gemäß dem ersten Aspekt; einen Antrieb; einen Ventilkörper mit einem im Verlauf eine Fluidkanals angeordneten, feststehenden Ventilsitz; und einen Absperrkörper, welches mittels des Antriebs auf den feststehenden Ventilsitz zu bewegt oder von dem feststehenden Ventilsitz wegbewegt wird.

Ein dritter Aspekt der Beschreibung betrifft eine Prozesspumpe umfassend die Vorrichtung gemäß dem ersten Aspekt; einen Antrieb; einen Pumpenkörper mit einem im Verlauf eines Fluidkanals angeordneten, feststehenden Pumpenraum; und ein im Pumpenraum angeordnetes Pumpmittel, welches mittels des Antriebs einen Fluidtransport entlang des Fluidkanals bewirkt.

Ein vierter Aspekt der Beschreibung betrifft eine Sensorvorrichtung umfassend die Vorrichtung gemäß dem ersten Aspekt; und einen Sensor, der ein mit dem Prozess oder dem Prozessfluid assoziiertes Sensorsignal ermittelt.

In der Zeichnung zeigen:
- Fig. 1: eine Vorrichtung der Prozessfluidtechnik in einem Blockdiagramm;
- Fig. 2: eine perspektivische Sicht auf ein Beispiel der Vorrichtung;
- Fig. 3: ein Beispiel eines Moduls zur Verbindung mit der Vorrichtung;
- Fig. 4: ein zweites Beispiel des Moduls;
- Fig. 5: eine Übersicht über verschiedene Beispiele des Moduls;
- Fig. 6: ein Blockdiagramm eines Prozessventils;
- Fig. 7: eine perspektivische Darstellung des Prozessventils der Figur 6; und
- Fig. 8: ein weiteres Beispiel des Prozessventils.

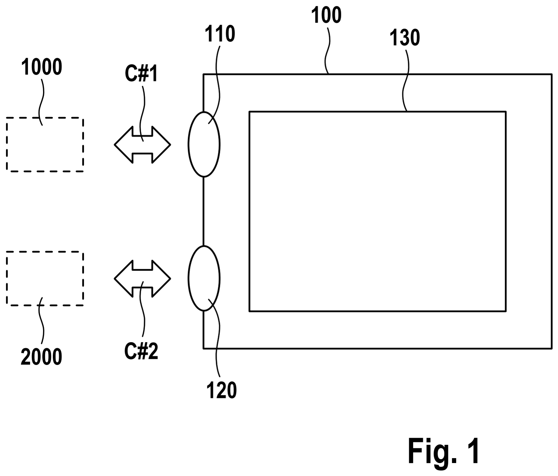

Figur 1 zeigt eine Vorrichtung 100 der Prozessfluidtechnik in einem schematischen Blockdiagramm. Die Vorrichtung 100 umfasst eine Elektronik 130, welche dazu eingerichtet ist, wenigstens eine Regel-, Steuer- und/oder Messfunktion im Zusammenhang mit einem Prozessfluid bereitzustellen. Die Vorrichtung 100 umfasst wenigstens eine erste physische Schnittstelle 110, welche dazu eingerichtet ist, Prozess-assoziierte Kommunikation C#1 zwischen der Elektronik 130 und wenigstens einer externen Prozesssteuerung 1000 bereitzustellen. Weitergehend umfasst die Vorrichtung 100 wenigstens eine zweite physische Schnittstelle 120, welche getrennt von der ersten physischen Schnittstelle 110 ausgeführt ist, wobei die zweite physische Schnittstelle 120 dazu eingerichtet ist, selektiv mit einem austauschbaren Modul 2000 gekoppelt zu werden, und wobei die zweite physische Schnittstelle 120 dazu eingerichtet ist, um über die Prozess-assoziierte Kommunikation C#1 hinausgehende, zusätzliche Kommunikation C#2 zwischen der Elektronik 130 und dem austauschbaren Modul 2000 zu ermöglichen.

Die Vorrichtung 100 wird gemeinsam mit anderen Komponenten in einer Prozessanlage betrieben.

Die Regelfunktion betrifft beispielsweise die Vorgabe eines Regelwertes beispielsweise für einen Fluiddurchfluss durch ein Prozessventil / eine Prozessarmatur oder eine Prozesspumpe, für eine Regelfunktion, die von der Vorrichtung realisiert wird. Der Regelwert ist Teil der Prozess-assoziierten Kommunikation C#1.

Die Steuerfunktion betrifft beispielsweise die Vorgabe eines Steuerwerts für eine Prozessarmatur oder ein Prozessventil, beispielsweise ein Öffnen oder Schließen, oder für eine Pumpe, beispielsweise ein Fördervolumen pro Zeiteinheit. Der Steuerwert ist Teil der Prozess-assoziierten Kommunikation C#1.

Gemäß den Beispielen der Prozesspumpe und der Prozessarmatur ist die Vorrichtung 100 als Steuereinheit oder Regeleinheit bezeichenbar.

Die Messfunktion betrifft das Versenden eines Zustands oder eines Sensorwertes durch die Vorrichtung an die übergeordnete externe Prozesssteuerung. Der Zustand und/oder Sensorwert ist Teil der Prozess-assoziierten Kommunikation C#1. Gemäß diesem Beispiel ist die Vorrichtung 100 als Betriebseinheit bezeichenbar.

Die erste Schnittstelle 110 der Vorrichtung 100 ist so ausgeführt, dass sie Prozessdaten gemäß dem IO-Link-Protokoll, ASi (Actuator-Sensor-Interface), Ethernet oder einem alternativen digitalen oder analogen Kommunikationsprotokoll übertragen kann. Diese Schnittstelle 110 ermöglicht eine bidirektionale Kommunikation zwischen der Vorrichtung 100 und externen Geräten, wobei sowohl Steuer- als auch Sensordaten ausgetauscht werden können. Durch die Unterstützung von IO-Link oder anderen Protokollen wird eine Integration der Vorrichtung 100 in moderne Automatisierungsumgebungen gewährleistet, wobei eine flexible Anpassung an unterschiedliche Kommunikationsstandards möglich bleibt.

Die zweite Schnittstelle 120 der Vorrichtung 100 ist vielseitig gestaltet und unterstützt sowohl UART als auch I2C, die gleichzeitig oder alternativ genutzt werden können. Zudem können zusätzlich oder alternativ GPIOs, also digital betriebene Kontaktelemente, vorgesehen sein, welche durch logische Programmierung frei bestimmbar sind. Folglich ermöglicht die Schnittstelle 120 die Kommunikation auch über andere, proprietäre Protokolle, um eine Kompatibilität mit verschiedenen Ausprägungen des Moduls 2000 zu gewährleisten. Diese Flexibilität erlaubt es, die Vorrichtung 100 und das Modul 2000 an unterschiedliche Anwendungen anzupassen, indem die jeweils optimale Kommunikationsmethode gewählt wird, ohne dabei Einschränkungen bei der Funktionalität oder Integration einzugehen.

Des Weiteren umfasst die zweite Schnittstelle 120 wenigstens zwei Kontaktelemente, über die die Spannungsversorgung des Moduls 2000 bereitgestellt wird.

Die Vorrichtung 100 ist so gestaltet, dass sie modular aufgebaut ist und flexibel unterschiedliche Funktionen unterstützt. Dies wird durch die selektive Austauschbarkeit eines Moduls 2000 erreicht, welches als Element in die Vorrichtung 100 integriert wird. Das Modul 2000 ermöglicht eine Anpassung der Vorrichtung 100 an spezifische Anforderungen, indem es durch verschiedene Ausführungen oder Varianten ersetzt werden kann.

Das Modul 2000 ist mit der Vorrichtung 100 kompatibel und wird in einer vorgesehenen Ausnehmung aufgenommen, die sowohl mechanische als auch elektrische Verbindungen umfasst.

Die Vorrichtung 100 erkennt automatisch die Funktion des eingesetzten Moduls 2000 und stellt die entsprechenden Betriebsmittel bereit, um dessen Funktionalität zu unterstützen. Beispiele für mögliche Funktionen des Moduls 2000 sind Sensorsignalerfassung, Aktoransteuerung, Bereitstellung einer Drahtlosschnittstelle, Bereitstellung einer Mensch-Maschine-Schnittstelle, Bereitstellung einer drahtgebundenen Schnittstelle (bspw. für die Montage und Service-Zwecke).

Der Austausch des Moduls 2000 erfolgt werkzeuggebunden, um eine sichere Anpassung der Vorrichtung 100 zu ermöglichen. Dabei ist sichergestellt, dass alle relevanten Schnittstellen sicher verbunden und funktionsfähig bleiben. Die selektive Austauschbarkeit gewährleistet eine hohe Flexibilität und Vielseitigkeit der Vorrichtung 100, während die Gesamtstruktur modular und wartungsfreundlich bleibt.

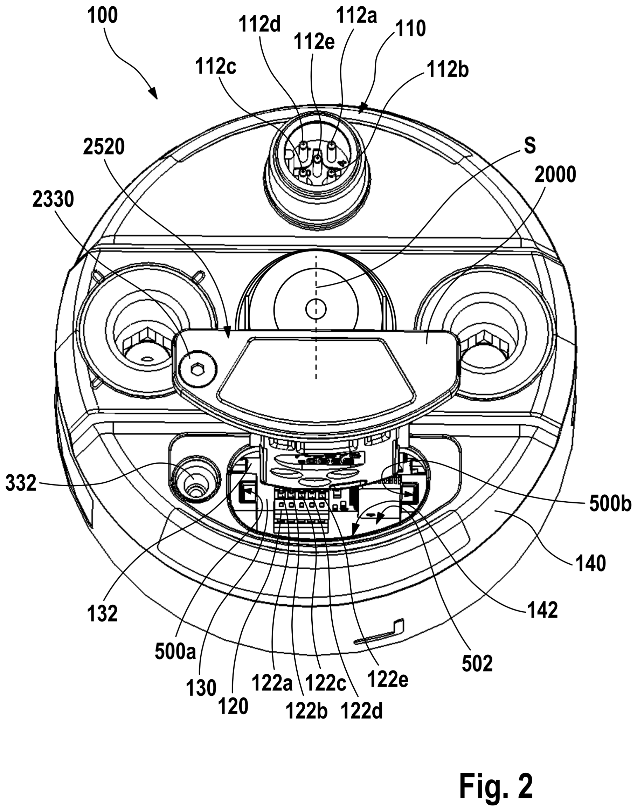

Figur 2 zeigt ein Beispiel der Vorrichtung 100 in einer perspektivischen Ansicht. Es ist im gezeigten Beispiel vorgesehen, dass die Vorrichtung 100 wenigstens ein Gehäuse 140 umfasst, wobei die zweite Schnittstelle 120 innerhalb des wenigstens einen Gehäuses 140 angeordnet ist, wobei eine Zugangsöffnung 142 des Gehäuses 140, welche zu der zweiten physischen Schnittstelle 120 führt, durch das austauschbare Modul 2000 verschlossen ist.

Die Elektronik 130 und die zweite Schnittstelle 120 sind gemeinsam innerhalb des Gehäuses 140 angeordnet. In einer nicht gezeigten Ausführungsform ist die zweite Schnittstelle in einem separaten Gehäuse angeordnet. Das bedeutet, dass die Elektronik 130 und die zweite Schnittstelle 120 in voneinander separierten Kammern angeordnet sind. Damit ist die zweite Schnittstelle 120 gekapselt und separiert von der Elektronik 130 angeordnet. Es ist gezeigt, dass die zweite Schnittstelle 120 auf einem Schaltungsträger 132 angeordnet ist, welche zu einem Teil die Elektronik 130 trägt.

Im Detail umfasst die erste physikalische Schnittstelle 110 eine Mehrzahl von elektrischen Verbindungselementen 112a-e, welche elektrisch leitend mit der Elektronik 130 verbunden sind, wobei die zweite physikalische Schnittstelle 120 eine Mehrzahl von elektrischen Verbindungselementen 122a-e umfasst, welche elektrisch leitend mit der Elektronik 130 verbunden sind. Die zweite physikalische Schnittstelle 120 ist in den Figuren als 10-poliger Steckverbinder ausgeführt, wobei aus Übersichtsgründen nur fünf der zehn Verbindungselemente 120a-e mit Bezugszeichen versehen sind.

Die Mehrzahl der elektrischen Verbindungselemente 122a-e der wenigstens einen zweiten physischen Schnittstelle 120 umfasst Steckkontakte, also eine jeweilige Buchse oder einen nicht gezeigten Stecker, welche eine elektrische Verbindung mit dem Modul 2000 ermöglichen.

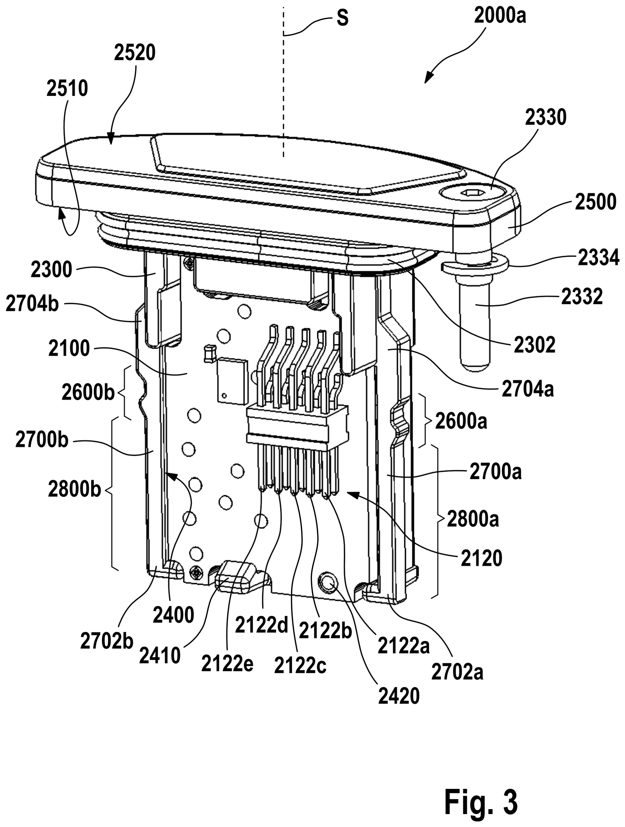

In Figur 3 ist das Modul 2000a gezeigt, das eine Mehrzahl von Gegensteckkontakten 2122a-e der Gegenschnittstelle 2100, also einen jeweiligen Stecker oder eine nicht gezeigte Buchse, umfasst, welche dazu eingerichtet sind, mechanisch und elektrisch mit den Steckkontakten der zweiten physischen Schnittstelle 120 verbunden zu werden. Aus Übersichtlichkeitsgründen sind nicht alle vorhandenen Verbindungselemente 122a-e, 2122a-e mit Bezugszeichen versehen.

Die Steckkontakte 2122a-e sind auf dem Schaltungsträger 2100 angeordnet, welche Teil des gezeigten Moduls 2000 ist. Der Schaltungsträger 2100 wird in einem Aufnahmeabschnitt 2400 eines Modulhauptkörpers 2300 gehalten. Der Modulhauptkörper 2300 ist beispielsweise ein Kunststoffspritzgussteil.

Der Schaltungsträger 2100 des in Figur 3 gezeigten Moduls 2000a ist beispielsweise mit einer Drahtlosschnittstelle bestückt, um mit einem Endgerät oder anderen Geräten in der Umgebung drahtlos zu kommunizieren.

Damit umfasst das Modul 2000a zumindest einen Modulhauptkörper 2300 und einen Schaltungsträger 2100.

Der Schaltungsträger 2100 ist so konturiert, dass er mittels eines Rasthakens 2410 und mittels eines Positionierstifts 2420 von dem Modulhauptkörper 2300 gehalten wird. Zum Verbinden des Schaltungsträgers 2100 mit dem Modulhauptkörper 2300 wird zunächst ein Abschnitt des Schaltungsträgers 2100 in eine nicht sichtbare Ausnehmung 2430 des Hauptkörpers 2300 eingebracht. Anschließend wird der dem vorgenannten Abschnitt gegenüberliegende Abschnitt des Schaltungsträgers 2100 in Richtung des Modulhauptkörpers 2300 gedrückt. Dabei wird eine Federkraft des Rasthakens 2410 überwunden. Der Positionierstift 2420 greift in eine Ausnehmung des Schaltungsträgers 2100 ein und legt damit den Schaltungsträger 2100 in ihrer ebenen Erstreckung zu dem Modulhauptkörper 2300 fest. Der Rasthaken 2410 verhindert ein Herausfallen des Schaltungsträgers 2100 aus dessen in Figur 3 gezeigten Position im Aufnahmeabschnitt 2400.

Anhand der Figuren 2 und 3 wird unter anderem der Steckvorgang erläutert. Für den Steckvorgang ist wenigstens eine Führungskontur 2800a-b des Moduls 2000 vorgesehen, um bei dem Steckvorgang des Moduls 2000 in eine zugeordnete Gegenkontur 500a-b der Vorrichtung 100 einzugreifen, um das Modul 2000 zumindest abschnittsweise entlang einer gedachten Steckachse S in eine Aufnahmekammer 502 der Vorrichtung 100 einzuführen und die elektrische Verbindung zwischen dem Modul 2000 und der zweiten physikalischen Schnittstelle 120 herzustellen.

Ein Schaltungsträger 132, der zumindest zu einem Teil die Elektronik 130 trägt, ist parallel zur Steckachse S des austauschbaren Moduls 2000 angeordnet ist.

Wenigstens eine Rastkontur 2600a-b des Moduls 2000 und eine zugeordnete Gegenrastkontur der Vorrichtung 100 sind derart eingerichtet, dass die Rastkontur 2600ab des Moduls 2000 und die Gegenrastkontur der Vorrichtung 100 nach Überwindung einer Rastkraft derart ineinander eingreifen, um das Modul 2000 an einer vordefinierten Montageposition zu der Vorrichtung 100 festzulegen.

Die vorliegenden Rastkonturen 2600a-b und die Gegenrastkonturen sind symmetrisch zur Steckachse S angeordnet.

Die Führungskontur 2800a-b und die Rastkontur 2600a-b sind jeweils an einem Steg 2700a-b angeordnet. Der jeweilige Steg 2700a-b ist entlang seiner parallel zur gedachten Steckachse S verlaufenden Längserstreckung freistehend, d.h. beabstandet zum übrigen Hauptkörper 2300. Der Steg 2700a-b bestimmt somit durch eine nachgiebige Ausführung in Kunststoff die Rastkraft, die notwendig ist, um den Rastvorgang abzuschließen, so dass die Rastkontur 2600a-b in die zugeordnete Gegenrastkontur eingreift. Der jeweilige Steg 2700a-b realisiert durch die Nachgiebigkeit / Federung eine Rastfunktion und durch seine längliche Ausprägung die Führungsfunktion zur axialen Führung des Moduls.

Die Gegenschnittstelle 2120 ist zwischen den beiden Stegen 2700a-b angeordnet. Insbesondere ist die Gegenschnittstelle 2120 mit Ihren elektrischen Kontaktelementen zwischen den distalen Enden der Stege 2700a-b angeordnet. Damit wird eine kompakte Bauweise realisiert.

Der jeweilige Steg 2700a-b ist einem dem Deckelabschnitt 2500 abgewandten Abschnitt 2702a-b und einem dem Deckelabschnitt 2500 zugewandten Abschnitt 2704a-b an den Hauptkörper 2300 angeformt.

Das Modul 2000 umfasst zudem einen Aufnahmeabschnitt 2400, der dazu konfiguriert ist, den Schaltungsträger 2100 aufzunehmen, welcher die physische Gegenschnittstelle 2120 des Moduls 2000 für die zweite physische Schnittstelle 120 der Vorrichtung 100 bereitstellt.

Die Gegensteckkontakte 2122a-e der physischen Gegenschnittstelle 2120 sind zur Verbindung mit der zweiten physischen Schnittstelle 120 ausgebildet.

Die Gegenschnittstelle 2120 auf dem Schaltungsträger 2100 ist speziell für die Kommunikation mit der zweiten Schnittstelle 120 der Vorrichtung 100 ausgelegt. Über diese Gegenschnittstelle 2120 kann die Elektronik 130 der Vorrichtung 100 direkt mit den auf dem Schaltungsträger 2100 angeordneten elektronischen Komponenten interagieren. Sie ermöglicht eine zuverlässige und effiziente Übertragung von Daten und Steuersignalen, wobei die Protokolle UART, I2C oder andere unterstützte Kommunikationsstandards genutzt werden können. Die Anordnung und Ausführung der Gegenschnittstelle 2120 gewährleistet eine optimale Verbindung, um die Funktionalität der Vorrichtung 100 sicherzustellen.

Das austauschbare Modul 2000 umfasst ein Dichtungselement, welches eine fluiddichte Verbindung zwischen der Zugangsöffnung 142 und dem Modul 2000 bereitstellt. Eine umlaufende Umfangsnut 2302 nimmt das nicht gezeigte Dichtungselement auf, welches beispielsweise eine im Schnitt runde Umfangsform aufweist. Das Dichtungselement ist beispielsweise aus einem Elastomerwerkstoff hergestellt, um eine dauerhafte Dichtwirkung bereitzustellen.

Ein Deckelabschnitt 2500 des Modulhauptkörpers 2300 bildet in dem montierten Zustand des Moduls 2000 den Abschluss des Gehäuses der Vorrichtung 100.

Eine dem Gehäuse der Vorrichtung 100 zugewandte Fläche 2510 liegt im montierten Zustand an einer Fläche der Vorrichtung 100, welche die in Figur 2 sichtbare Zugangsöffnung 142 umgibt, an.

Eine von dem übrigen Gehäuse der Vorrichtung 100 abgewandte Fläche 2520 bildet im montierten Zustand des Moduls 2000 einen Teil einer Außenfläche des Gehäuses der Vorrichtung 100.

Das Modul 2000 ist so eingerichtet, dass es durch einen Benutzer nur werkzeuggebunden entfernt und ersetzt werden kann.

Zur werkzeuggebundenen Montage und Demontage des Moduls 2000 ist im Modulhauptkörper 2300, insbesondere im Deckelabschnitt 2320 eine Sicherungsschraube 2330 angeordnet. Die Sicherungsschraube 2330 greift im montierten Zustand mit ihrem Außengewinde 2332 in ein in Figur 2 gezeigtes separat ausgeführtes Innengewinde 332 der Vorrichtung 100 ein, um das Modul 2000 ausziehsicher zu der übrigen Vorrichtung 100 festzulegen.

Ein Sicherungsring 2334 sichert die Schraube gegen ungewolltes Herausfallen in Bezug zu dem Deckelabschnitt 2500.

Die Gegenschnittstelle 2120 ist zwischen dem Deckelabschnitt 2500 und einem gegenüberliegenden distalen Ende, das zuerst in die Ausnehmung der Vorrichtung eingeführt wird, angeordnet.

Die Kontaktelemente 2122a-e der Gegenschnittstelle 2120 erstrecken sich mit ihrem jeweiligen distalen Ende in Richtung des distalen Endes des Moduls 2000a.

Vorteilhaft ergibt sich durch die so angeordnete Gegenschnittstelle eine Kompaktierung der Ausführung und eine effiziente Raumausnutzung.

Zudem ist der Schaltungsträger 2100 doppelseitig bestückt, was den Freiheitsgrad zur Anordnung der Schnittstelle an der gezeigten Position ermöglicht.

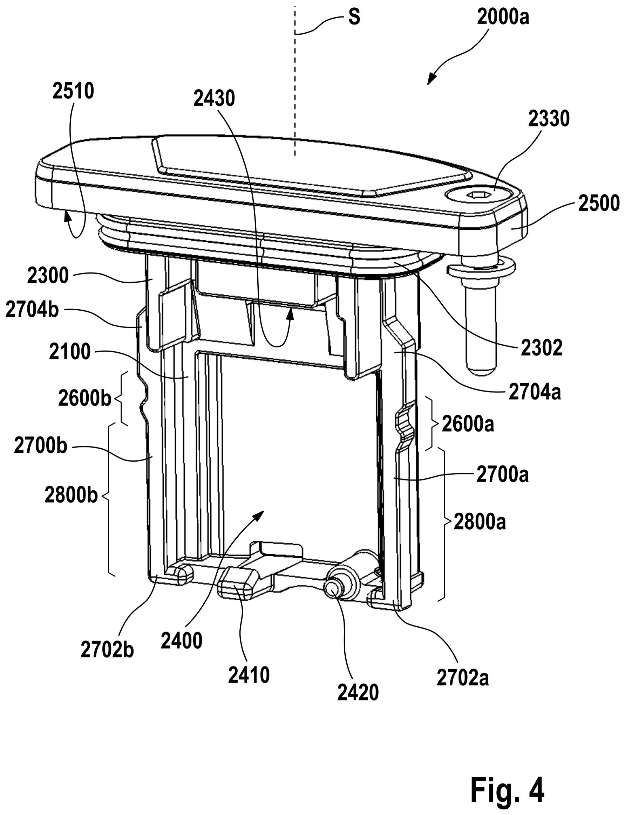

Figur 4 zeigt das Modul 2000z ohne einen damit verbundenen Schaltungsträger. Ohne einen Schaltungsträger dient das Modul 2000z als reiner Verschluss der Öffnung des Gehäuses der Vorrichtung. Die in Figur 4 gezeigte Ausprägung des Moduls 2000z ist aber mit einem Schaltungsträger nachrüstbar.

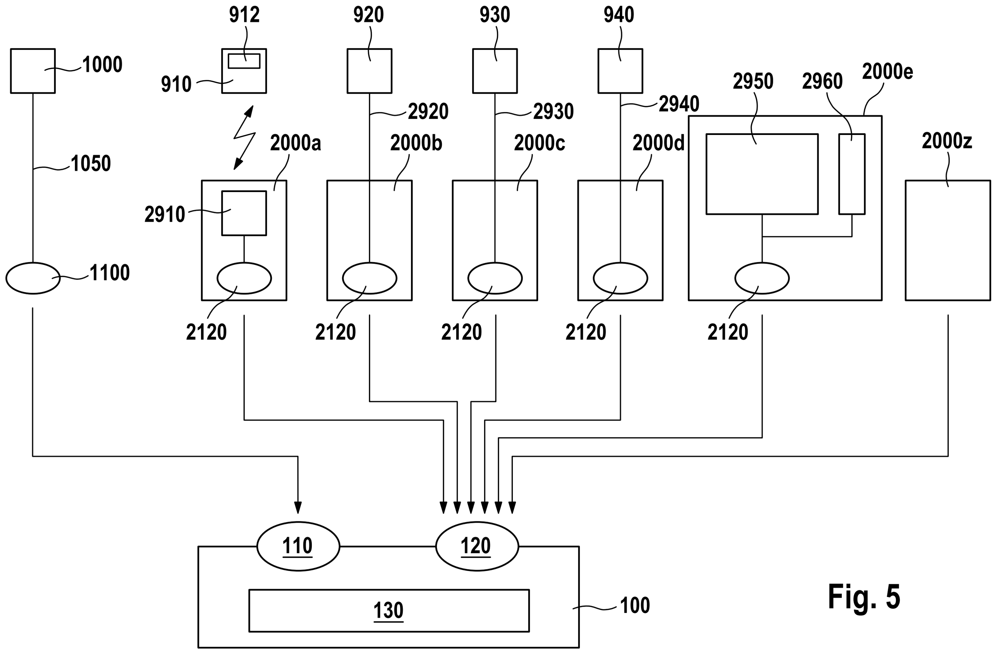

Figur 5 zeigt in einem schematischen Übersichtsdiagramm neben der ersten physischen Schnittstelle 110 und deren Konnektivität die verschiedenen Typen von austauschbaren Modulen 2000.

Die erste physische Schnittstelle 110 ist die Prozessschnittstelle der Vorrichtung 100. Die Prozesssteuerung 1000 ist über ein Kabel 1050 mit der Vorrichtung 100 verbunden. Hierzu weist das Kabel 1050 an seinem distalen Ende einen Gegenschnittstelle 1100 für die erste physische Schnittstelle 110 der Vorrichtung 100 auf. Die Gegenschnittstelle 1100 und die erste physische Schnittstelle 110 sind beispielsweise als Gegensteckverbinder und Steckverbinder ausgebildet. Über die Schnittstelle 110 wird die Vorrichtung 100 beispielsweise auch mit elektrischer Energie versorgt.

Das austauschbare Modul 2000a umfasst eine Drahtlosschnittstelle 2910, welche gemeinsam mit der zweiten physischen Schnittstelle 120, der Gegenschnittstelle 2120 und der Elektronik 130 dazu eingerichtet ist, um eine drahtlose Kommunikation zwischen der Elektronik 130 und einem Endgerät 910, insbesondere mit einer Service-Applikation, welche auf dem Endgerät 910 ausgeführt wird, zu ermöglichen.

Die Drahtlosschnittstelle 2910 ist so ausgeführt, dass die Elektronik 130 der Vorrichtung 100 über die Schnittstellen 120 und 2120 direkten Zugriff auf die drahtlose Kommunikation erhält. Diese Schnittstelle 2910 ermöglicht die Übertragung von Daten über mindestens eines der unterstützten Protokolle wie Bluetooth, WLAN oder vergleichbare drahtlose Standards. Durch die Integration in die Signalwege der Schnittstellen 120 und 2120 wird eine zuverlässige und flexible Verbindung zur Außenwelt gewährleistet, wodurch die Vorrichtung 100 für unterschiedlichste Anwendungsfälle in drahtlosen Netzwerken einsetzbar ist.

Die Gegenschnittstelle 2120 auf dem Schaltungsträger 2100 und die Schnittstelle 120 der Vorrichtung 100 sind so ausgelegt, dass sie neben der Datenkommunikation auch zusätzliche Funktionen unterstützen. Über diese Verbindungen wird eine stabile Spannungsversorgung bereitgestellt, während eine automatische Steckerkennung die korrekte Verbindung sicherstellt. Zudem ermöglichen dedizierte Boot- und Reset-Pins die Steuerung von Initialisierungs- und Wiederherstellungsprozessen.

Im Falle der Realisierung einer Bluetooth-Funktion erlaubt ein BLE-Connect-Signal es dem Modul 2000a, dem Host, d.h. der Elektronik 130, zu signalisieren, dass eine Bluetooth-Verbindung erfolgreich aufgebaut wurde (BLE: Bluetooth Low Energy). Für die Datenkommunikation steht ein UART-Kanal zur Verfügung, während I2C genutzt wird, um die Version des Moduls 2000a-e, 2000z, und die Hardware-Revision des Schaltungsträgers 2100 auszulesen. Diese umfassenden Funktionen gewährleisten eine vielseitige und zuverlässige Schnittstelle für den Betrieb der Vorrichtung 100 mit dem austauschbaren Modul 2000e.

Das austauschbare Modul 2000b umfasst eine Kommunikationsleitung 2920, welche gemeinsam mit der zweiten physischen Schnittstelle 120, der Gegenschnittstelle 2120 und der Elektronik 130 dazu eingerichtet ist, um eine drahtgebundene Kommunikation zwischen der Elektronik 130 und einem weiteren Endgerät 920, insbesondere mit einer Wartungs- oder Bedatungs-Applikation, welche auf dem Endgerät 920 ausgeführt wird, zu ermöglichen. Die Kommunikationsleitung 2920 wird beispielsweise aus dem Deckelabschnitt des Moduls 2000b herausgeführt.

In einem weiteren Beispiel ist das Endgerät 910, 920 als speicherprogrammierbare Steuerung ausgebildet, um während der Fertigung auf die Elektronik 130 zugreifen. Der Zugriff während der Fertigung umfasst beispielsweise ein Aufspielen von Software, Aufspielen von Konfigurationsparametern, und das Durchführen einer Prüfung der Vorrichtung bzw. der damit verbundenen Komponenten.

Das austauschbare Modul 2000c, 2000d umfasst eine Signalleitung 2930, 2940, welche gemeinsam mit der zweiten physischen Schnittstelle 120, der Gegenschnittstelle 2120 und der Elektronik 130 dazu eingerichtet ist, wenigstens ein Sensorsignal eines Sensors 930 an die Elektronik 130 weiterzuleiten und/oder ein Ansteuersignal für einen weiteren Aktor 940 von der Elektronik 130 ausgehend zu versenden.

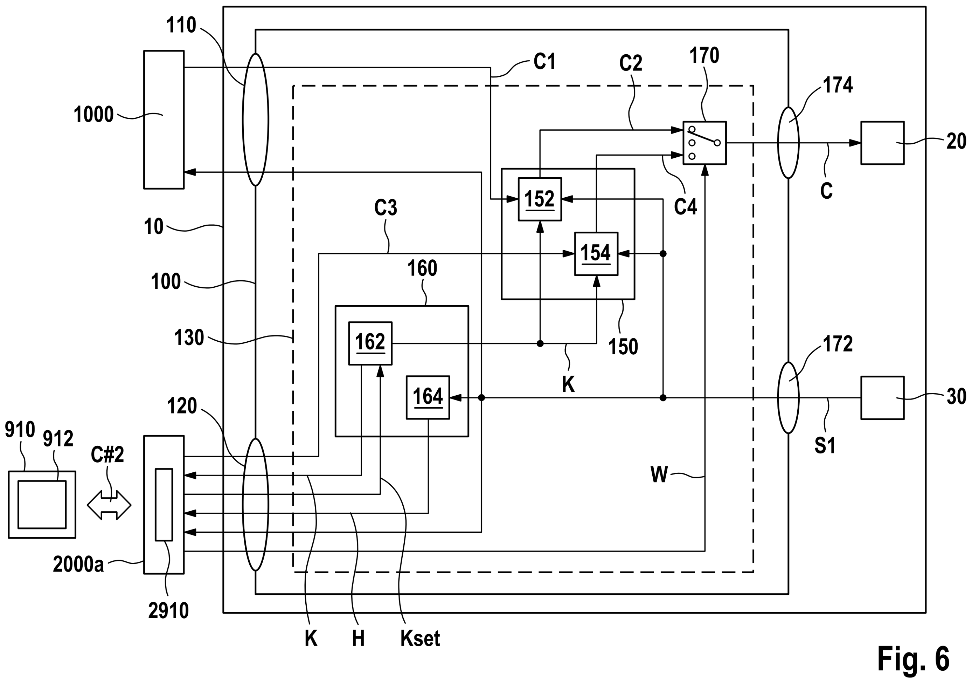

Der weitere Aktor 940 entspricht nicht dem Aktor 20 aus der Figur 6. Vielmehr umfasst der weitere externe Aktor 940 beispielsweise einen von der Vorrichtung 100 separat vorgesehenen Aktor, beispielsweise ein externes Vorsteuerventil, also ein Pilotventil, ein externes steuer- und/oder parametrierbares Sicherheitsventil, oder ein Elektromotor.

Der externe Aktor 940 ist in einem Beispiel einer weiteren Vorrichtung, also beispielsweise einem separat ausgeführten Ventil, einer separat ausgeführten Pumpe, zugeordnet. Es wird also eine Art Master-Slave-Konfiguration bereitgestellt, in der die Vorrichtung 100 die weitere Vorrichtung betreibt.

Das austauschbare Modul 2000e umfasst eine Bedieneinheit 2950 und/oder eine Anzeigeeinheit 2960, welche gemeinsam mit der zweiten physischen Schnittstelle 120, der Gegenschnittstelle 2120 und der Elektronik 130 dazu eingerichtet ist, mit der Vorrichtung 100 assoziierte bzw. mit dem Prozess assoziierte und von der Elektronik 130 bereitgestellte Zustandsdaten einem Benutzer anzuzeigen und/oder vom Benutzer eingegebene Befehle insbesondere zum Betreiben der Vorrichtung 100 zu ermitteln und an die Elektronik 130 zum Betreiben wenigstens eines Aktors weiterzugeben.

Das austauschbare Modul 2000z stellt eine Abdichtung der Vorrichtung 100 gegen Umwelteinflüsse bereit und stellt keine elektrische Verbindung mit der zweiten physischen Schnittstelle 120 her. Somit kann die zweite Schnittstelle 120 im Betrieb der Vorrichtung 100 funktionslos bleiben.

Figur 5 zeigt also ein Modulsystem, welches die Vorrichtung 100 umfasst. Eine Mehrzahl von austauschbaren Modulen 2000a-z ist zur Verbindung mit der Vorrichtung 100 verfügbar. Im betriebsbereiten Zustand ist wenigstens eines der verfügbaren, austauschbaren Module 2000a-z mit der Vorrichtung 100 verbunden.

Figur 6 zeigt in einem schematischen Blockdiagramm die Ausführungsform des Moduls 2000a mit der Drahtlosschnittstelle 2910 an einem Beispiel eines Prozessventils 10. Das Prozessventil 10 umfasst wenigstens einen Aktor 20, beispielsweise ein Vorsteuerventil für einen pneumatischen Antrieb oder einen Elektromotor, und einen Sensor 30, beispielsweise einen Positionssensor für die Ermittlung der Position der Ventilstange bzw. des Absperrkörpers.

Die Vorrichtung 100 umfasst einen Prozessor 150 und eine Speichereinheit 160. Ein auf der Speichereinheit 160 abgespeichertes Computerprogramm in Form einer Software wird auf dem Prozessor 150 ausgeführt, um die hier beschriebenen, mit der Vorrichtung 100 assoziierten Verfahrensschritte auszuführen.

Das Endgerät 910 ist beispielsweise ein Smartphone oder ein Tablet mit drucksensitivem Display. Alternativ ist das Endgerät 910 ein Laptop oder Personal Computer. Das Endgerät 910 umfasst zudem einen Prozessor und eine Speichereinheit, die gemeinsam mit einer Benutzerschnittstelle, beispielsweise dem drucksensitiven Display, dazu eingerichtet sind, die in dieser Beschreibung dem Endgerät 910 zugeordneten Verfahren durchzuführen.

Das Endgerät 910 ist beispielsweise dazu eingerichtet, mit der Vorrichtung 100 assoziierte Zustandsinformationen H und/oder Sensorsignale S1 zu empfangen und über eine Benutzerschnittstelle 912 des Endgeräts 910 anzuzeigen.

Die Zustandsinformation H umfasst beispielsweise historisch aufgenommene oder akkumulierte Sensorinformationen oder Zustandsinformationen, welche in einem Speicher 164 abgespeichert sind.

Das Endgerät 910 ist in einem Beispiel dazu eingerichtet, wenigstens einen Steuerbefehl C3 über die Benutzerschnittstelle 912 zu erfassen und den wenigstens einen Steuerbefehl C3 an die Drahtlosschnittstelle 2910 des Moduls 2000 zu senden, wobei die Vorrichtung 100 gemeinsam mit der Elektronik 130, der zweiten physischen Schnittstelle 120, der Gegenschnittstelle 2120 und der Drahtlosschnittstelle 2910 dazu eingerichtet ist, den wenigstens einen Steuerbefehl C3 zu empfangen, und wenigstens ein Steuersignal C2, C für wenigstens einen Aktor 20 in Abhängigkeit von dem wenigstens einen Steuerbefehl C3 zu generieren.

In einer ersten Betriebsart wird das Prozessventil 10 von der Prozesssteuerung 1000 betrieben. In der ersten Betriebsart kann das Endgerät 910 kommunikativ von der Vorrichtung 100 entkoppelt, also funktionslos sein.

In der ersten Betriebsart empfängt ein erster Funktionsblock 152 einem Steuerbefehl C1 von der Prozesssteuerung 1000 über die erste Schnittstelle 110. Der erste Funktionsblock 152 empfängt über eine Sensorschnittstelle 172 ein Sensorsignal S1, welches von dem Sensor 30 generiert wird. Konfigurationsparameter K sind in einem Speicher 162 abgelegt und werden dem ersten Funktionsblock bereitgestellt.

Der Funktionsblock 152 ermittelt ein Steuersignal C2 in Abhängigkeit von dem Steuerbefehl C1, in Abhängigkeit von dem Sensorsignal S1 und in Abhängigkeit von wenigstens einem der Konfigurationsparameter K. Ein Auswahlschalter 170 ist in der ersten Betriebsart stets so eingestellt, dass das Steuersignal C2 als Steuersignal C über eine Schnittstelle 174 an den Aktor 20 zu dessen Betrieb in Abhängigkeit von dem Steuersignal C weitergeleitet wird.

Beispielsweise umfasst der Steuerbefehl C1 den Befehl "Ventil schließen". Der Funktionsblock 152 einer Vorrichtung 100 eines normal geöffneten Prozessventils 10 prüft, ob das Sensorsignal S1 einen geöffneten Zustand des Prozessventils indiziert. Ist dies der Fall, wird in Abhängigkeit von einem Ventilpositionsschwellwert als Konfigurationsparameter, ein Vorsteuerventil im Sinne des Aktors 20 so mit dem ermittelten Steuersignal C bzw. C2 so weit geöffnet, sodass das Prozessventil 10 geschlossen wird.

In einer zweiten Betriebsart wird kein Signal an den Aktor gesendet, was die gezeigte Mittelstellung des Auswahlschalters 170 indiziert. Der Auswahlschalter 170 wird mit einem Betriebsartwahlsignal W betrieben, welches von dem Endgerät 910 über die Schnittstellen 2910, 120 von der Vorrichtung 100 empfangen wird.

In einer dritten Betriebsart, einer Service-Betriebsart, wird der Betrieb des Aktors 20 von dem Bediener des Endgeräts 910 bestimmt. Das Endgerät 910 nimmt also einen Befehl von dem Bediener entgegen und versendet einen entsprechenden Steuerbefehl C3 an einen Funktionsblock 154. Der Funktionsblock 154 ermittelt ein Steuersignal C4 in Abhängigkeit von dem Steuerbefehl C3, in Abhängigkeit von dem Sensorsignal S1 und in Abhängigkeit von wenigstens einem der Konfigurationsparameter K. Der Auswahlschalter 170 ist in der dritten Betriebsart so eingestellt, dass das Steuersignal C4 als Steuersignal C über die Schnittstelle 174 an den Aktor 20 zu dessen Betrieb in Abhängigkeit von dem Steuersignal C weitergeleitet wird.

Das Endgerät 910 kann zudem die aktuellen Konfigurationsparameter K aus dem Speicher 162 auslesen.

Das Endgerät 910 ist dazu konfiguriert, um neue Konfigurationsparameter Kset in dem Speicher 162 abzuspeichern, die bisher dort eingespeicherte Konfigurationsparameter ersetzen und/oder ergänzen. Vorteilhaft lässt sich so die Gerätekonfiguration bzw. die Parametereinstellungen mit dem Endgerät 910 verändern.

Eine Initialisierung des Prozessventils 10 lässt sich mit dem Funktionsblock 154 ebenfalls durchführen und über das Endgerät 910 starten. Bei der Initialisierung werden selbständig Konfigurationsparameter von dem Funktionsblock 154 ermittelt und in dem Speicher 162 abgespeichert.

Über das Endgerät 910 lassen sich die Konfigurationsparameter im Speicher 162 auf die ursprünglichen Werkseinstellungen zurücksetzen.

Das Prozessventil 10 ist eine Prozessarmatur und kann als Sitzventil oder Membranventil ausgebildet sein. Weitere Prozessarmaturen umfassen einen Kugelhahn oder eine Absperrklappe.

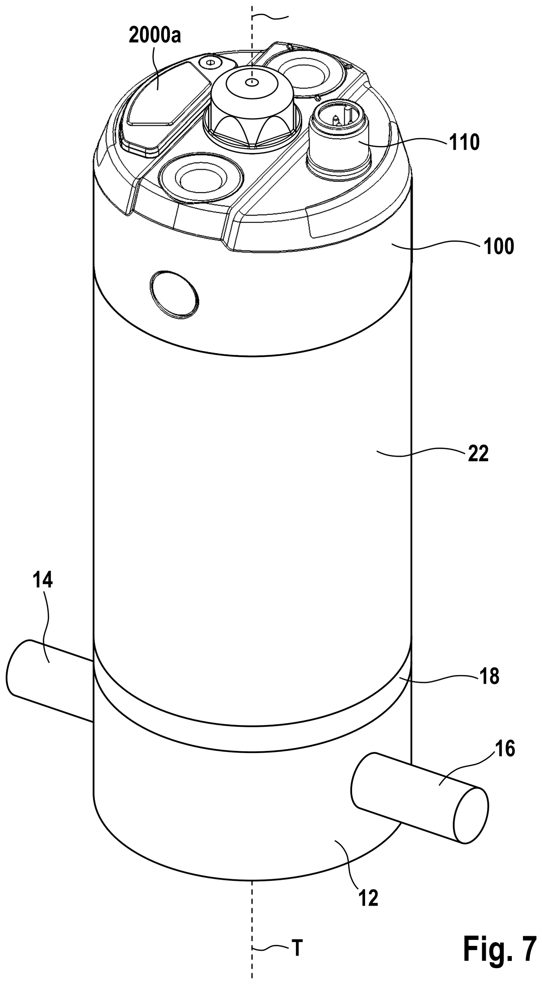

Figur 7 zeigt schematisch das als Membranventil ausgebildete Prozessventil 10 mit der Vorrichtung 100, die das austauschbare Modul 2000a umfasst. Die Vorrichtung 100 ist als eine Steuer- und/oder Regeleinheit für das Prozessventil 10 ausgebildet. Das Prozessventil 10 umfasst einen Ventilkörper 12, in dem wenigstens ein feststehender Ventilsitz im Verlauf wenigstens eines Prozessfluidkanals angeordnet ist. Der Prozessfluidkanal ist über zwei Fluidanschlüsse 14 und 16 zugänglich. Ein mit dem Ventilsitz interagierender Absperrkörper 18 ist vorliegend als Membran 18 ausgebildet, welche eine Öffnung, welche zum Ventilsitz führt, fluiddicht nach außen verschließt. Der als Membran ausgeführte Absperrkörper 18 ist zwischen einer Antriebseinheit 22, welche den Aktor umfasst, und dem Ventilkörper 12 angeordnet. Der Aktor bewegt den Absperrkörper 18 entlang einer Stellachse T auf den feststehenden Ventilsitz zu und von diesem weg, um das Prozessventil zu verschließen oder zu öffnen.

Im Beispiel der Figur 7 ist die Antriebseinheit 22 pneumatisch betriebenen, wobei der Aktor im Sinne wenigstens eines Vorsteuerventils innerhalb der Vorrichtung 100 eingebaut ist um eine Druckluftkammer mit Steuerdruck zu versorgen und den Absperrkörper 18 entlang der Stellachse T translatorisch zu bewegen. Der Sensor zur Ermittlung der Position des Absperrkörpers 18 ist beispielsweise ebenfalls in der Vorrichtung 100 untergebracht.

In einem anderen Beispiel ist der Aktor ein Elektromotor und der Sensor ein Strommessglied und/oder eine Ventilpositionsmesseinrichtung, die die Position der Ventilstange in Bezug zum feststehenden Gehäuse ermittelt. Hierbei ist der Aktor separat von der Vorrichtung 100 angeordnet und der Sensor ist in der Vorrichtung 100 als Teil der Elektronik angeordnet.

Ein Antrieb des Prozessventils 10 wird also beispielsweise durch ein Vorsteuerventil und einen in einem Hubraum beweglichen Kolben bereitgestellt. Alternativ wird der Antrieb durch einen von der Vorrichtung 100 separat ausgeführten Motor, beispielsweise einen Elektromotor bereitgestellt.

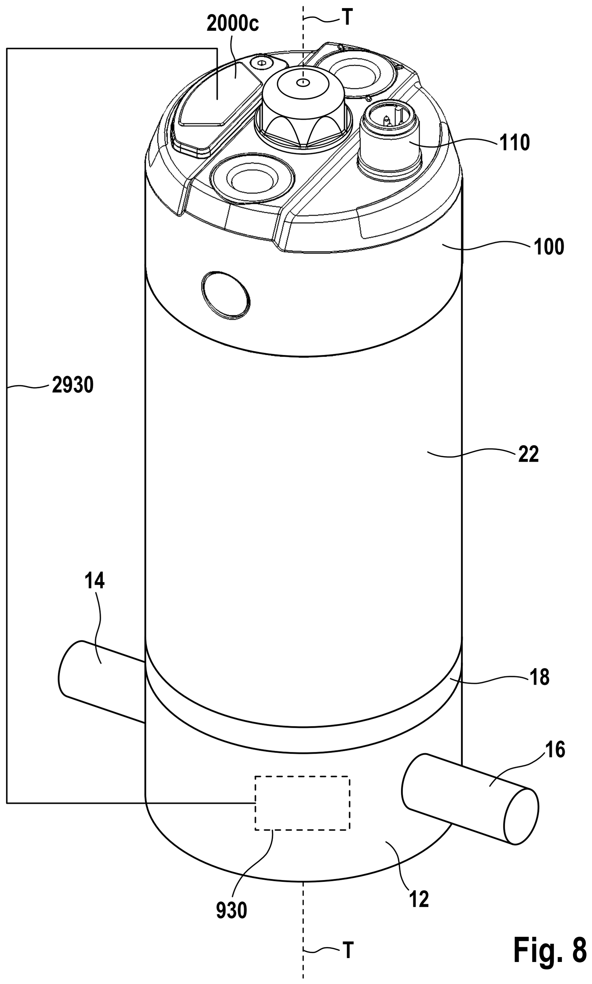

In Figur 8 ist die Ausführungsform der Vorrichtung 100 mit eingebautem Modul 2000c gezeigt. Der Sensor 930 ist beispielsweise einen Drucksensor, ein Durchflusssensor oder ein Temperatursensor, der in dem Ventilkörper 12 integriert ist. Das Signal des Sensors 930 wird über die Leitung 2930 in das Modul 2000c und über das Modul 2000c an die Elektronik der Vorrichtung 100 geführt. So kann die Elektronik den Aktor in Abhängigkeit von dem Signal des Sensors 930 ansteuern und/oder der Prozesssteuerung das Signal des Sensors 930 weitergeben.

Die verschiedenen Funktionen und Ausprägungsvarianten des austauschbaren Moduls 2000 können allein ausgeführt sein, so wie es in Figur 5 gezeigt ist. Die verschiedenen Funktionen und Ausprägungsvarianten des Moduls 2000 sind selbstverständlich auch untereinander kombinierbar. Beispielsweise kann das Modul 2000c der Figur 8 zusätzlich eine Drahtlosschnittstelle des Moduls 2000a aus den Figuren 6 und 7 umfassen.

Folglich ist die Vorrichtung 100 Teil des Prozessventils 10, welches umfasst: den Antrieb; den Ventilkörper 12 mit dem im Verlauf des Fluidkanals angeordneten, feststehenden Ventilsitz; und den Absperrkörper 18, welcher mittels des Antriebs auf den feststehenden Ventilsitz zu bewegt oder von dem feststehenden Ventilsitz wegbewegt wird.

In nicht gezeigter Form ist die Vorrichtung 100 dieser Beschreibung Teil einer Prozesspumpe, wobei die Prozesspumpe umfasst: einen Antrieb; einen Pumpenkörper mit einem im Verlauf eines Fluidkanals angeordneten, feststehenden Pumpenraum; und ein Pumpmittel, welches mittels des Antriebs einen Fluidtransport entlang des Fluidkanals bewirkt.

In nicht gezeigter Form ist die Vorrichtung 100 dieser Beschreibung Teil einer Sensorvorrichtung, die einen Sensor, der ein mit dem Prozess oder dem Prozessfluid assoziiertes Sensorsignal ermittelt, umfasst.

## Patentansprüche

1. Eine Vorrichtung (100) der Prozessfluidtechnik, wobei die Vorrichtung (100) umfasst:
eine Elektronik (130), welche dazu eingerichtet ist, wenigstens eine Regel-, Steuer- und/oder Messfunktion im Zusammenhang mit einem Prozessfluid bereitzustellen;
wenigstens eine erste physische Schnittstelle (110), welche dazu eingerichtet ist, Prozess-assoziierte Kommunikation (C#1) zwischen der Elektronik (130) und wenigstens einer externen Prozesssteuerung (1000) bereitzustellen; und
wenigstens eine zweite physische Schnittstelle (120), welche getrennt von der ersten physischen Schnittstelle (110) ausgeführt ist, wobei die zweite physische Schnittstelle (120) dazu eingerichtet ist, selektiv mit einem austauschbaren Modul (2000) gekoppelt zu werden, und wobei die zweite physische Schnittstelle (120) dazu eingerichtet ist, um über die Prozess-assoziierte Kommunikation (C#1) hinausgehende, zusätzliche Kommunikation (C#2) zwischen der Elektronik (130) und dem austauschbaren Modul (2000) zu ermöglichen.

2. Die Vorrichtung (100) gemäß dem Anspruch 1, wobei die Vorrichtung (100) wenigstens ein Gehäuse (140) umfasst, wobei die zweite Schnittstelle (120) innerhalb des wenigstens einen Gehäuses (140) angeordnet ist, wobei eine Zugangsöffnung (142) des Gehäuses (140), welche zu der zweiten physischen Schnittstelle (120) führt, durch das austauschbare Modul (2000) verschlossen ist.

3. Die Vorrichtung (100) gemäß dem Anspruch 2, wobei die Elektronik (130) und die zweite Schnittstelle (120) gemeinsam innerhalb des Gehäuses (140) angeordnet sind.

4. Die Vorrichtung (100) gemäß einem der vorigen Ansprüche, wobei die erste physikalische Schnittstelle (110) eine Mehrzahl von elektrischen Verbindungselementen (112a-e) umfasst, welche elektrisch leitend mit der Elektronik (130) verbunden sind, und wobei die zweite physikalische Schnittstelle (120) eine Mehrzahl von elektrischen Verbindungselementen (122a-e) umfasst, welche elektrisch leitend mit der Elektronik (130) verbunden sind.

5. Die Vorrichtung (100) gemäß einem der vorigen Ansprüche, wobei wenigstens eine Führungskontur (2800a-b) des Moduls (2000) bei einem Steckvorgang des Moduls (2000) in eine zugeordnete Gegenkontur (500a-b) der Vorrichtung (100) eingreift, um das Modul (2000) zumindest abschnittsweise entlang einer gedachten Steckachse (S) in eine Aufnahmekammer (502) der Vorrichtung (100) einzuführen und die elektrische Verbindung zwischen dem Modul (2000) und der zweiten physikalischen Schnittstelle (120) herzustellen.

6. Die Vorrichtung (100) gemäß einem der vorigen Ansprüche, wobei wenigstens eine Rastkontur (2600a-b) des Moduls (2000) und eine zugeordnete Gegenrastkontur der Vorrichtung (100) derart eingerichtet sind, dass die Rastkontur (2600a-b) des Moduls (2000) und die Gegenrastkontur der Vorrichtung (100) nach Überwindung einer Rastkraft derart ineinander eingreifen, um das Modul (2000) an einer vordefinierten Montageposition zu der Vorrichtung (100) festzulegen.

7. Die Vorrichtung (100) gemäß einem der vorigen Ansprüche, wobei das Modul (2000) einen Aufnahmeabschnitt (2400) umfasst, der dazu konfiguriert ist, einen Schaltungsträger (2100) aufzunehmen, welche eine physische Gegenschnittstelle (2120) für die zweite physische Schnittstelle (120) der Vorrichtung (100) bereitstellt.

8. Die Vorrichtung (100) gemäß einem der vorigen Ansprüche 2 bis 7, wobei das austauschbare Modul (2000) ein Dichtungselement umfasst, welches eine fluiddichte Verbindung zwischen der Zugangsöffnung (142) und dem Modul (2000) bereitstellt.

9. Die Vorrichtung (100) gemäß einem der vorigen Ansprüche, wobei das austauschbare Modul (2000a) eine Drahtlosschnittstelle (2910) aufweist, welche gemeinsam mit der zweiten physischen Schnittstelle (120) der Vorrichtung (100), einer Gegenschnittstelle (2120) des austauschbaren Moduls (2000) und der Elektronik (130) der Vorrichtung (100) dazu eingerichtet ist, um eine drahtlose Kommunikation zwischen der Elektronik (130) und einem Endgerät (910), insbesondere mit einer Service-Applikation, welche auf dem Endgerät (910) ausgeführt wird, zu ermöglichen.

10. Die Vorrichtung (100) gemäß dem Anspruch 9 und das Endgerät (910), wobei das Endgerät (910) dazu eingerichtet ist, mit der Vorrichtung (100) assoziierte Zustandsinformationen (H) und/oder Sensorsignale (S1) zu empfangen und über eine Benutzerschnittstelle (912) des Endgeräts (910) anzuzeigen.

11. Die Vorrichtung (100) gemäß dem Anspruch 10 und das Endgerät (910), wobei das Endgerät (910) dazu eingerichtet ist, wenigstens einen Steuerbefehl (C3) über die Benutzerschnittstelle (912) zu erfassen und den wenigstens einen Steuerbefehl (C3) an die Drahtlosschnittstelle (2910) des Moduls (2000) zu senden, und wobei die Vorrichtung (100) gemeinsam mit der Elektronik (130), der zweiten physischen Schnittstelle (120), der Gegenschnittstelle (2120) und der Drahtlosschnittstelle (2910) dazu eingerichtet ist, den wenigstens einen Steuerbefehl (C3) zu empfangen, und wenigstens ein Steuersignal (C2, C) für wenigstens einen Aktor (20) in Abhängigkeit von dem wenigstens einen Steuerbefehl (C1) zu generieren.

12. Die Vorrichtung (100) gemäß einem der vorigen Ansprüche, wobei das austauschbare Modul (2000c, 2000d) eine Signalleitung (2930, 2940) umfasst, welche gemeinsam mit der zweiten physischen Schnittstelle (120) der Vorrichtung (100), der Gegenschnittstelle (2120) des Moduls (2000) und der Elektronik (130) der Vorrichtung (100) dazu eingerichtet ist, wenigstens ein Sensorsignal eines Sensors (930) an die Elektronik (130) weiterzuleiten und/oder ein Ansteuersignal für einen Aktor (940) von der Elektronik (130) ausgehend zu versenden.

13. Die Vorrichtung (100) gemäß einem der vorigen Ansprüche, wobei das austauschbare Modul (2000b) eine Kommunikationsleitung (2920) umfasst, welche gemeinsam mit der zweiten physischen Schnittstelle (120), der Gegenschnittstelle (2120) und der Elektronik (130) dazu eingerichtet ist, um eine drahtgebundene Kommunikation zwischen der Elektronik (130) und einem weiteren Endgerät (920), insbesondere mit einer Wartungs- oder Bedatungs-Applikation, welche auf dem Endgerät (920) ausgeführt wird, zu ermöglichen.

14. Die Vorrichtung (100) gemäß einem der vorigen Ansprüche, wobei das austauschbare Modul (2000e) eine Bedieneinheit (2950) und/oder eine Anzeigeeinheit (2960) umfasst, welche gemeinsam mit der zweiten physischen Schnittstelle (120) der Vorrichtung (100), der Gegenschnittstelle (2120) des Moduls (2000) und der Elektronik (130) der Vorrichtung (100) dazu eingerichtet ist, mit der Vorrichtung (100) assoziierte bzw. mit dem Prozess assoziierte und von der Elektronik (130) bereitgestellte Zustandsdaten einem Benutzer anzuzeigen und/oder vom Benutzer eingegebene Befehle insbesondere zum Betreiben der Vorrichtung (100) zu ermitteln und an die Elektronik (130) zum Betreiben wenigstens eines Aktors weiterzugeben.

15. Die Vorrichtung (100) gemäß einem der Ansprüche 1 bis 8, wobei das austauschbare Modul (2000z) eine Abdichtung gegen Umwelteinflüsse bereitstellt und keine elektrische Verbindung mit der zweiten physischen Schnittstelle (120) herstellt.

16. Eine Prozessarmatur, insbesondere ein Prozessventil (10), umfassend:
die Vorrichtung (100) gemäß einem der vorigen Ansprüche;
einen Antrieb, welcher von der Vorrichtung (100) betrieben wird;
einen Armaturkörper, insbesondere einen Ventilkörper (12), mit einem im Verlauf eine Fluidkanals angeordneten, feststehenden Sitz; und
einen Absperrkörper (18), welcher mittels des Antriebs auf den feststehenden Sitz zu bewegt oder von dem feststehenden Sitz wegbewegt wird.

17. Ein Modulsystem umfassend:
die Vorrichtung (100) gemäß einem der Ansprüche 1 bis 8;
eine Mehrzahl von verfügbaren, austauschbaren Modulen (2000a-z) gemäß einem der Ansprüche 9 bis 15, wobei wenigstens eines der verfügbaren, austauschbaren Module (2000a-z), insbesondere während eines Betriebs der Vorrichtung (100), mit der Vorrichtung (100) verbunden ist.
